# EUROPÄISCHE PATENTSCHRIFT

(11) **EP 2 942 542 B1**
(45) Veröffentlichungstag und Bekanntmachung des Hinweises auf die Patenterteilung: **24.10.2018**
(21) Anmeldenummer: 15001368.8
(22) Anmeldetag: 07.05.2015
(51) Int. Cl.: F16D 65/097

(54) **DÄMPFUNGSBLECH**
DAMPING SHEET
TÔLE D'AMORTISSEMENT

(30) Priorität: 07.05.2014 DE 102014006646
(43) Veröffentlichungstag der Anmeldung: 11.11.2015
(73) Patentinhaber: Wolverine Advanced Materials GmbH, 74613 Öhringen (DE)
(72) Erfinder: Wolter, Frank, 74629 Pfedelbach (DE)
(74) Vertreter: Patentanwälte Magenbauer & Kollegen Partnerschaft mbB

(56) Entgegenhaltungen:
- EP-A1- 1 455 109
- EP-A1- 1 469 221
- EP-A1- 1 927 779
- EP-A2- 0 916 865
- DE-A1-102011 115 214
- DE-T2- 69 606 568

## Beschreibung

Die Erfindung bezieht sich auf ein Dämpfungsblech, insbesondere für Kraftfahrzeugbremsen, mit wenigstens einer Trägerplatte, die auf wenigstens einer Seite eine Elastomerbeschichtung aufweist, wobei auf einer Seite der Trägerplatte eine erste Druckfläche zur Anlage eines druckaufbringenden Bauteils und auf der anderen Seite eine zweite Druckfläche zur Anlage eines druckaufnehmenden Bauteils vorgesehen ist und eine der beiden Druckflächen auf der Elastomerbeschichtung angeordnet ist, die eine Härte und eine Dicke in Druckrichtung aufweist, wobei in der zweiten Druckfläche längs der Blechebene im Betriebszustand eine durch das druckaufbringende Bauteil erzeugte Bremskraft einwirkt.

Solche Dämpfungsbleche sind zwischen Bremskolben und Bremsbelag angeordnet, um eine Übertragung von Schwingungen zwischen diesen Bauteilen zu vermeiden und um Geräusche zu dämpfen. Das Dämpfungsblech leitet den vom Bremskolben bzw. bei Schwimmsattelbremsen den vom Bremssattel aufgebrachten Bremsdruck in die Bremsbelag-Rückenplatte und damit in den Bremsbelag ein, der seinerseits den Bremsdruck auf z.B. einer Bremsscheibe aufbringt.

Aus der DE 199 12 957 A1 ist es bekannt, eine Gummi-, Kunststoff- oder Lackschicht auf der dem Bremskolben bzw. dem Bremssattel zugewandten Oberseite der Trägerplatte des Dämpfungsblechs anzuordnen, und auf der Unterseite eine Klebschicht, mit der das Dämpfungsblech auf der Bremsbelag-Rückenplatte aufgeklebt ist. In dieser Druckschrift wird darauf hingewiesen, dass aufgeklebte Dämpfungsbleche nach einer gewissen Betriebsdauer dazu neigen, störende Eigengeräusche zu erzeugen. Die Ursache wird in einem Aufwölben des Randes des Dämpfungsbleches bei Beaufschlagung der Druckfläche mit einem Anpressdruck gesehen. Zur Beseitigung der Eigengeräusche, d. h. des Aufwölbens des Dämpfungsblechrandes, wird vorgeschlagen, einen die Dicke des Dämpfungsblechs vermindernden Freischnitt auszubilden, der mindestens teilweise außerhalb des Druckaufnahmebereichs liegt und den Kraftfluss in Richtung auf einen zum Aufwölben neigenden Rand schwächt.

Ein ähnliches Dämpfungsblech ist aus der DE 20 2006 013 606 U1 bekannt. Auch dieses Dämpfungsblech ist mit seiner Unterseite auf der Bremsbelag-Rückenplatte aufgeklebt. In dieser Druckschrift wird zur Vereinfachung der Herstellung eines solchen Dämpfungsbleches vorgeschlagen, dass die Trägerplatte des Dämpfungsbleches ein Stanzteil sein sollte, auf welches die Elastomerbeschichtung auf der Oberseite mittels Spritzgießen aufgebracht ist.

In EP 0 916 865 A2 wird darauf hingewiesen, dass hochfrequente Geräusche einer Scheibenbremse durch parallel zum Dämpfungsblech laufende Vibrationen erzeugt werden können. Die Vibrationen können durch einen geringeren Elastizitätsmodul der Elastomerschicht parallel zum Dämpfungsblech verringert werden. Allerdings wird dadurch auch der Elastizitätsmodul der Elastomerschicht senkrecht zum Dämpfungsblech verringert, was jedoch unerwünscht ist, da damit keine ausreichende Tragfähigkeit für den Kolbendruck mehr vorhanden ist. Als Lösung wird vorgeschlagen, in der Elastomerschicht Nuten auszubilden, um den Elastizitätsmodul parallel zum Dämpfungsblech und damit die Vibrationen und die dadurch erzeugten Geräusche zu verringern.

In der DE 199 59 911 A1 wird zur Reduzierung von Geräuschen beim Bremsen, insbesondere von Schwingungsgeräuschen, vorgeschlagen, zwischen Dämpfungsblech und Bremsbelag-Rückenplatte zumindest ein weiteres Blech mit zumindest einer Öffnung vorzusehen. Diese Öffnung dient zur Aufnahme von Dämpfungsmittel, insbesondere Fett.

Aus der DE 197 56 553 A1 ist bekannt, in einer Druckeinleitungsfläche wenigstens zwei Bereiche mit zueinander unterschiedlichen Drucksteifigkeiten auszubilden, um den Druckpunkt zu verlagern.

In der DE 38 33 552 A1 wird vorgeschlagen, auf der dem Bremsbelag abgewandten Seite der Bremsbelag-Rückenplatte längliche Vertiefungen strahlenförmig anzuordnen, um dort Luftströme zu verteilen und so eine gleichmäßige Kühlung des Bremsbelages zu erzielen. Diese Vertiefungen können durch ein Dämpfungsblech ausgebildet sein.

Ferner ist es bekannt, das Dämpfungsblech gegen hohe Frequenzen am Bremskolben bzw. Bremssattel anzukleben, um aufgrund einer höheren Gesamtmasse die Eigenfrequenzen zu verringern oder um Anlagegeräusche zu verhindern, die durch eine Bewegung des Bremsbelages und des an diesem befestigten Dämpfungsbleches hervorgerufen werden. Die Maßnahme ist jedoch mit hohem Aufwand und daher mit hohen Kosten verbunden.

Aus der DE 696 06 568 T2 ist ein Dämpfungsblech bekannt, welches zumindest einseitig zunächst eine Gummischicht trägt, auf welcher dann eine Phenolharzschicht angeordnet ist. Die Phenolharzschicht ist härter als die Gummischicht. Die EP 1 455 109 A1 und die EP 1 927 779 A1 offenbaren ein aus einer Stahlplatte bestehendes Dämpfungsblech, das eidseitig mit Gummi kaschiert ist. Bei der EP 1 469 221 A1 ist eine Aluminiumplatte beidseitig mit Gummi kaschiert. Bei der EP 0 916 865 A2, bei welcher die Dämpfungsplatte aus einem mit Gummi kaschierten Stahlblecht besteht, weisen die Gummischichten Nuten oder Ausnehmungen auf. Auch die DE 10 2011 115 214 A1 zeigt eine Belagträgerplatte, welche mit Ausnehmungen für linsenförmige Erhebungen der Kolben versehen ist.

Der Erfindung liegt die Aufgabe zugrunde, den Aufwand bei der Herstellung und Montage von Dämpfungsblechen, die die Bewegung von Bremsbelägen parallel zum Dämpfungsblech verhindern oder wenigstens reduzieren, zu verringern und gleichzeitig die Einsatzdauer solcher Dämpfungsbleche zu verlängern und deren Verwendungsmöglichkeiten zu erweitern.

Erfindungsgemäß wird diese Aufgabe bei einem Dämpfungsblech der eingangs genannten Art mit den Merkmalen des Anspruchs 1 gelöst, um die der Bremskraft entgegenwirkende Reibkraft zu verstärken und Relativbewegungen der beteiligten Bauteile zu minimieren und zu dämpfen.

Der Erfindung liegt die Erkenntnis zugrunde, dass für Elastomere die klassischen Gesetze der Festkörperreibung nicht gelten, da Elastomere keine starre Oberfläche aufweisen, sondern abhängig von Härte und Kriechverhalten sich an die Gegenfläche anpassen. Insgesamt setzt sich die Reibungskraft F an einer Gummiprobe aus den Komponenten F = F(Adhäsion) + F(Hysterese) + F(Kohäsion) + F(Viskose) zusammen, wobei die Hauptkomponenten der Reibung die Adhäsions- und die Hysteresereibung sind. Die kritische Rauigkeit hängt neben der Oberflächenenergie γ auch vom elastischen Schubmodul G ab. Materialien mit sehr kleinen elastischen Modulen wie bei Gummi können daher auch an sehr rauen Oberflächen adhieren. Der Schubmodul G ist nicht, wie der Elastizitätsmodul, von der Konstruktionsform (Formfaktor) der Gummifedern abhängig, sondern nur von dem Werkstoff Gummi. Der Schubmodul erhöht sich proportional zur Härte der Gummischicht und der Reibungskoeffizient nimmt mit steigender Härte ab. Denn bei größerer Rauigkeit gibt es einen Kontakt nur in relativ wenigen Kontaktpunkten, d.h. die reale Kontaktfläche ist relativ gering, und die Adhäsionskraft vermindert sich wesentlich. Die Adhäsionskraft resultiert näherungsweise aus dem Produkt der wirkenden Schubspannungen und der realen Kontaktfläche. Mit zunehmender Flächenpressung werden die Rauigheitshügel mehr und mehr abgeplattet, sodass die reale Kontaktfläche so lange zunimmt, bis sie der "scheinbaren" Kontaktfläche (Nenn-Kontaktfläche) sehr nahe kommt. Bis dahin steigt die Reibkraft nichtlinear mit der Normalkraft an und der Reibwert ist somit eine Funktion der Kontaktpressung. Daher tritt mit steigendem Druck der o.g. Effekt auch bei größeren Shore-Härten ein, was durch die erfindungsgemäße Maßnahme einer vorgegebenen Flächenpressung in der Druckfläche - beispielsweise durch Anordnen von Aussparungen in der Druckfläche - erreicht wird.

Durch die erfindungsgemäßen Maßnahmen wird die Reibkraft zwischen Bremskolben bzw. Bremssattel und Elastomerbeschichtung und/oder die Reibkraft zwischen Bremsbelag-Rückenplatte und Elastomerbeschichtung des Dämpfungsbleches auf den entsprechenden elastomerbeschichteten Seiten soweit erhöht, dass ein Ankleben nicht mehr notwendig ist, um eine Relativbewegung des Bremsbelages gegenüber dem Dämpfungsblech und/oder eine Relativbewegung des Dämpfungsbleches (und des mit ihm verbundenen Bremsbelags) gegenüber der Kolbenseite in Drehrichtung der Bremsscheibe zu verhindern. Dadurch verringern sich die Materialkosten und auch der Arbeitsaufwand bei der Herstellung und Montage. Es hat sich herausgestellt, dass die erfindungsgemäßen Maßnahmen insbesondere im Bereich hoher Drücke eine positive Wirkung haben. Zudem unterliegt auch ein Kleber einem Verschleiß und darf in manchen Fällen ein Kleber auf zumindest einer der beiden Dämpfungsblechseiten aus Kompressibilitäts- oder Verschleißgründen nicht eingesetzt werden. Z.B. kann bei einer elektrischen Parkbremse der Kleber aus Kompressibilitäts- oder Verschleißgründen nicht auf der den Kolben zugewandten Seite eingesetzt werden. Bei einem erfindungsgemäßen Dämpfungsblech sind keine diesbezüglichen Einschränkungen vorhanden.

Bevorzugt weist die Trägerplatte auf ihren beiden Seiten eine Elastomerbeschichtung auf und sind beide Druckflächen auf der jeweils entsprechenden Elastomerbeschichtung angeordnet. Es sind Fälle denkbar, bei denen ein Kleber, z.B. aus Kompressibilitäts- oder Verschleißgründen, auf keiner der beiden Seiten eines Dämpfungsbleches eingesetzt wird. Derartige Einschränkungen in den Verwendungsmöglichkeiten sind bei einem erfindungsgemäßen Dämpfungsblech in der beschriebenen Ausführungsform nicht vorhanden.

In günstiger Weiterbildung der Erfindung beträgt die Härte jeder Elastomerbeschichtung weniger als 75 Shore-Härte und bevorzugt maximal 70 Shore-Härte. Wenn die Härte der Elastomerbeschichtung weniger als 75 Shore-Härte beträgt, sind bei ebenen Elastomerbeschichtungen bereits deutliche Erhöhungen der Reibkraft insbesondere bei höheren Bremsdrücken im Bereich von 20 bis 30 bar vorhanden. Zusätzlich bewirkt ein weiches Material eine höhere Dämpfung. Das heißt, gleichzeitig mit der erhöhten Reibwirkung wird auch die Dämpfung verbessert.

Vorteilhafterweise liegt die Dicke jeder Elastomerbeschichtung im Größenbereich von 0,01 mm bis 0,05 mm und besonders bevorzugt im Größenbereich von 0,05 mm bis 0,25 mm. Bei diesen Dicken der Elastomerbeschichtung wird bereits eine Verformungsfähigkeit erzielt, die in Verbindung mit einer geeigneten Härte der Elastomerbeschichtung zu einer besseren Anpassung der Elastomerbeschichtung an der gegenüberliegenden Oberfläche und zu einer entsprechend größeren Adhäsionsreibung führt.

In günstiger Weiterbildung der Erfindung enthält wenigstens eine der Elastomerbeschichtungen einen feinkörnigen magnetischen Füllstoff und/oder grobkörnige Partikel. Im Fall der magnetischen Füllstoffe wird eine zusätzliche Anlegekraft erzeugt, die im Falle eines lediglich aufgelegten Bleches als Fixierhilfe dienen und eine Vorkraft zur gleichmäßigen Anlage des Bleches ausüben kann. Die grobkörnigen Partikel können über die Oberfläche der restlichen Elastomerbeschichtung hinausragen oder als Stützelemente in die Elastomerbeschichtung eingebettet sein. Falls die Partikel aus der Oberfläche hervorragen, können sie die Anlagefläche zur Anlage des druckaufbringenden Bauteils bzw. des druckaufnehmenden Bauteils ausbilden. Hierdurch reduziert sich die Anlagefläche und erhöht sich infolgedessen die Flächenpressung in der Druckfläche, was wiederum in Verbindung mit der Härte und der Dicke der Partikel in der Elastomerbeschichtung zu dem vorgegebenen Mindestmaß an Verformung der Partikel bzw. Elastomerbeschichtung unter der Druckfläche beiträgt.

Im Rahmen dieser Anmeldung wird unter dem Begriff "erste/zweite Druckfläche" die Fläche verstanden, an der das druckaufbringende bzw. druckaufnehmende Bauteil bei ebener Oberflächenausbildung des Dämpfungsbleches anliegt bzw. anliegen würde.

Der Begriff "Anlagefläche" bezeichnet die Fläche, an der das druckaufbringende bzw. druckaufnehmende Bauteil bei unebener Oberflächenausbildung des Dämpfungsbleches (in der Druckfläche) tatsächlich anliegt.

Bei ebener Oberflächenausbildung des Dämpfungsbleches ist also die Anlagefläche gleich der Druckfläche, ansonsten ist die Anlagefläche ein Teil der Druckfläche und damit kleiner als die Druckfläche.

In einer bevorzugten Ausführungsform ist auf wenigstens eine der Elastomerbeschichtungen eine weitere Beschichtung aufgebracht. Die weitere Beschichtung kann als nur dünne, nicht wesentlich die Materialeigenschaften verändernde Auflage auf die bestehende Elastomerbeschichtung aufgebracht sein. Sie dient dann zur Verbesserung der Oberflächeneigenschaften und kann beispielsweise eine andere Härte aufweisen, wobei jedoch ihr Reibbeiwert mindestens so groß ist wie der der Elastomerbeschichtung. Die weitere Beschichtung kann sich vollflächig über die Elastomerbeschichtung erstrecken oder auch nur über Teilbereiche.

Vorzugsweise enthält die weitere Beschichtung Elastomere, Silikon oder haptische Lacke. Diese Materialien können andere Eigenschaften als der Grundwerkstoff aufweisen und den Einsatzbereich erweitern bzw. die Herstellbarkeit durch einfachen Auftrag vereinfachen.

In einer günstigen Ausgestaltung der Erfindung weist wenigstens eine der Elastomerbeschichtungen in einem die Druckfläche enthaltenden Bereich eine erste Härte und ansonsten eine zweite, von der ersten verschiedene Härte auf. Mit dieser Maßnahme ist es möglich, in der Druckfläche diejenige Härte auszubilden, die dort zur Erzielung der vorgegebenen Mindestverformung in Verbindung mit der Dicke und der Flächenpressung notwendig ist, und andererseits den restlichen Bereich des Dämpfungsbleches im Hinblick auf gegebenenfalls andere Anforderungen anders als in der Druckfläche auszubilden.

Dabei ist vorzugsweise die zweite Härte durch eine auf die Elastomerbeschichtung aufgebrachte weitere Beschichtung ausgebildet. Die Ausbildung zweier Bereiche mit unterschiedlichen Härten oder gegebenenfalls auch die Ausbildung von mehr als zwei Bereichen mit jeweils voneinander verschiedenen Härten ist auf diese Weise äußerst einfach möglich.

Erfindungsgemäß ist in der Elastomerbeschichtung wenigstens eine Aussparung ausgebildet, sodass nur ein Teil der Druckfläche eine Anlagefläche für das druckaufbringende bzw. das druckaufnehmende Bauteil bildet, wobei die Gesamtfläche der Aussparungen so groß ist, dass bei einer vorgegebenen Druckkraft in der Anlagefläche die vorgegebene Flächenpressung vorhanden ist. Die Aussparungen erstrecken sich durch die gesamte Dicke des Dämpfungsbleches hindurch, bilden also Durchgangsöffnungen im Dämpfungsblech aus. Denkbar ist auch eine Ausbildung von Aussparungen durch Prägungen, die sich durch das gesamte Dämpfungsblech hindurch erstrecken und in der Druckfläche als Vertiefungen ausgebildete Aussparungen und auf der anderen Seite hervorstehende Auswölbungen bilden. Die in der Druckfläche zwischen den Aussparungen stehengebliebenen Druckflächenteile bilden die Anlagefläche aus. Mit Hilfe von Aussparungen in der Druckfläche kann die dort vorhandene, von dem druckaufbringenden bzw. von dem druckaufnehmenden Bauteil erzeugte Flächenpressung in einfacher Weise auf das erforderliche Maß in Abhängigkeit von der vorhandenen Härte und Dicke der Elastomerbeschichtung eingestellt werden.

Die Aussparungen können sich über die gesamte Fläche des Dämpfungsbleches erstrecken oder die Druckfläche - beispielsweise einen Kreisring - mit einer mindestens erforderlichen Anlagefläche nachzeichnen oder sich unabhängig von der Form der Druckfläche um ein vorgegebenes Maß über diese hinaus erstrecken, sodass die Aussparungen über die Anlagefläche hinausragen können oder umgekehrt die Anlagefläche nahezu freistellen.

In weiterer bevorzugter Ausgestaltung der Erfindung weist die Druckfläche mindestens eine Prägung auf, die sich durch den gesamten Querschnitt des Dämpfungsbleches hindurch erstreckt und in der Druckfläche eine Aussparung zur Reduzierung der Anlagefläche ausbildet und auf der gegenüberliegenden Seite des Dämpfungsbleches eine hervorstehende Noppe oder einen hervorstehenden Kragen ausbildet, die bzw. der bei Anlage des Dämpfungsbleches an einem angrenzenden Bauteil in eine Bohrung dieses Bauteils hineinragt. Mit dieser Maßnahme wird in einem Arbeitsgang sowohl auf der einen Seite des Dämpfungsbleches eine Aussparung erzeugt als auch auf der anderen Seite des Dämpfungsbleches eine hervorstehende Noppe oder ein hervorstehender Kragen, mit der bzw. dem das Dämpfungsblech in seiner Lage relativ zu einem angrenzenden Bauteil fixiert werden kann, indem die Noppe bzw. der Kragen in eine Bohrung dieses Bauteils hineinragt und so eine Relativbewegung des Dämpfungsbleches zu diesem Bauteil verhindert.

Vorteilhafterweise sind in der Druckfläche Erhöhungen angeordnet, die zwischen sich die Aussparungen ausbilden und deren Oberseiten die Anlagefläche bilden. Bei der hier beschriebenen Ausführungsform ist die Trägerplatte mit einer Elastomerbeschichtung versehen, die gleich mit den gewünschten Oberflächenprofilierungen, d.h. mit den gewünschten Erhöhungen, auf die Trägerplatte aufgebracht worden ist. Beispielsweise kann die Trägerplatte eine Beschichtung aus isotropem Elastomermaterial aufweisen, das nicht als ebene Elastomerschicht auf die Trägerplatte aufgebracht worden ist (wobei nachträglich Aussparungen in diese ebene Elastomerschicht und gegebenenfalls auch in die Trägerplatte eingebracht werden), sondern mit geeigneten Formgebungsmitteln gleich mit den gewünschten Erhöhungen auf die Trägerplatte aufgebracht worden ist, wobei die Zwischenräume zwischen den Erhöhungen die Aussparungen sind. Die Oberseiten der Erhöhungen bilden die Anlagefläche für das druckaufbringende oder das druckaufnehmende Bauteil und dienen somit zur Einstellung der erforderlichen Flächenpressung bei vorgegebenem Bremsdruck sowie vorgegebener Härte und Dicke der Elastomerbeschichtung.

Solche Erhöhungen können auch durch ein texturiertes oder strukturiertes oder profiliertes Material ausgebildet sein, bei dem eine geringere Anlagefläche quasi bereits im Material eingebaut ist. Die richtungsunabhängigen Oberflächenstrukturen oder eingebetteten Versteifungen ermöglichen eine Herstellung ohne Ausrichtung des Materials. Auf dem Dämpfungsblech kann eine Oberflächenstruktur in Form inselartiger, auch ineinander greifender und/oder unterschiedlich hoher Erhöhungen ausgebildet sein. Die Erhöhungen haben vorzugsweise eine Höhe von nicht mehr als 0,5 mm. Im Querschnitt können sie ballen-, stufen-, pyramiden-, kegel-, trapezförmig und in der Grund- oder Anlagefläche kreis- oder polygonförmig oder in Symbolform sowie gemischt oder unregelmäßig ausgebildet sein. Sie sind auf einer Basiselastomerbeschichtung ausgebildet, können sich über die gesamte Oberfläche des Dämpfungsbleches erstrecken oder bilden mindestens in der Druckfläche Erhöhungen zur Reduzierung der Anlagefläche aus.

Bei Ausbildung solcher Erhöhungen bzw. Aussparungen sind bereits deutliche Anstiege der Reibkraft insbesondere bei höheren Bremsdrücken im Bereich von 20 bis 30 bar vorhanden, wenn die Härte der Elastomerbeschichtung gleich oder mehr als 75 Shore-Härte beträgt.

Vorteilhafterweise ist die weitere Beschichtung auf den Erhöhungen und zwischen den Erhöhungen aufgebracht. Hierdurch kann wie bei den zuvor beschriebenen eingelagerten Partikeln u.a. eine Stützfunktion für eine weiche Auflage erreicht werden oder sie kann mit einer größeren Shore-Härte als teilweise Abdeckung einer weicheren Struktur dienen.

In einer weiteren bevorzugten Ausgestaltung der Erfindung stehen im Fall, dass die Elastomerbeschichtung grobkörnige Partikel enthält, Partikel aus der Elastomerbeschichtung hervor und bilden Erhöhungen aus. Die Ausbildung einer reduzierten Anlagefläche mit erhöhter Flächenpressung ist auf diese Weise einfach möglich.

Die Erfindung wird nachfolgend anhand der Zeichnungen beispielshalber noch näher erläutert. Es zeigen:
- Fig. 1: eine Seitenansicht einer Anordnung mit Bremssattel, einer Ausführungsform eines erfindungsgemäßen Dämpfungsbleches, Bremsbelag und Bremsscheibe;
- Fig. 2: eine Draufsicht auf das Dämpfungsblech aus Figur 1, mit der Darstellung der Druckfläche zur Anlage der Finger des Bremssattels sowie mit der Darstellung der Lage von Aussparungen in der Elastomerbeschichtung in der Druckfläche;
- Fig. 3a bis 3e: Draufsichten auf weitere Ausführungsformen eines Dämpfungsbleches, das hier lediglich als Ausführungsbeispiel zur Anlage der Finger eines Bremssattels ausgebildet ist, mit im Fall der Figuren 3a bis 3d halbseitigen Darstellungen unterschiedlicher Ausbildungen von Aussparungen in der Elastomerbeschichtung in der Druckfläche;
- Fig. 4: eine Draufsicht auf eine Ausführungsform eines Dämpfungsbleches in Form eines Lochbleches zur Ausbildung von Aussparungen auf der gesamten Fläche des Dämpfungsbleches; und
- Fig. 5a und 5b: Draufsichten auf weitere Ausführungsformen eines Dämpfungsbleches, das hier lediglich als Ausführungsbeispiel zur mittigen Anlage eines Bremskolbens ausgebildet ist.

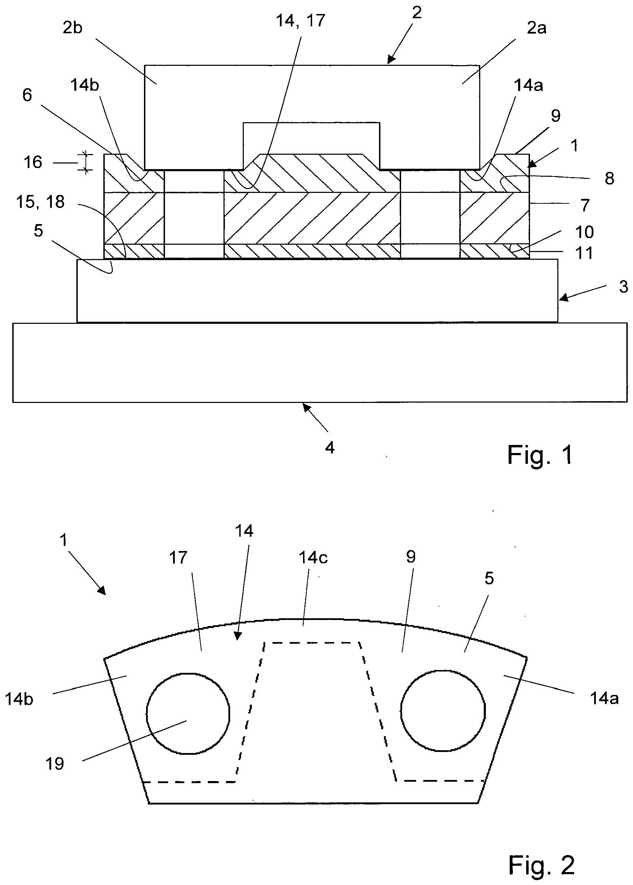

In dem in Figur 1 dargestellten Ausführungsbeispiel ist ein erfindungsgemäßes Dämpfungsblech 1 zwischen einem Bremssattel 2 als druckaufbringendem Bauteil und einem Bremsbelag 3 als druckaufnehmendem Bauteil angeordnet. Der Bremsbelag 3 seinerseits liegt an einer Bremsscheibe 4 an.

Der Bremssattel 2 übt einen Bremsdruck auf das Dämpfungsblech 1 aus, das den Bremsdruck in den Bremsbelag 3 weiterleitet, der dann schließlich den Bremsdruck auf die Bremsscheibe 4 ausübt. Durch den Bremsdruck wird zwischen Bremsbelag 3 und Bremsscheibe 4 eine Bremskraft erzeugt, die einerseits in die Bremsscheibe 4 und andererseits in den Bremsbelag 3 eingeleitet wird. Der Bremssattel 2 weist außerhalb des Dämpfungsbleches 1 (nicht dargestellte) Halterungen auf, die mit dem Bremsbelag 3 zur Aufnahme der Bremskraft in Krafteingriff kommen, wenn der Bremssattel 2 sich während des Bremsvorganges um ein ausreichendes Maß in Druckrichtung auf den Bremsbelag 3 zubewegt hat. Ist dieser Krafteingriff vorhanden, wird somit die Bremskraft direkt vom Bremsbelag 3 in den Bremssattel 2 eingeleitet. Davor - also in der Zeitspanne ab dem Beginn des Bremsvorganges bis zum Krafteingriff-wird die in den Bremsbelag 3 eingeleitete Bremskraft in die dem Bremsbelag 3 zugewandte Unterseite 5 des Dämpfungsbleches 1 und durch dieses hindurch in die dem Bremssattel 2 zugewandte Oberseite 6 des Dämpfungsbleches 1 weitergeleitet.

Im in Figur 1 dargestellten Ausführungsbeispiel weist das Dämpfungsblech 1 eine Trägerplatte 7 auf, die auf ihrer dem Bremssattel 2 zugewandten Oberseite 8 mit einer Elastomerbeschichtung 9 versehen ist. Auf ihrer dem Bremsbelag 3 zugewandten Unterseite 10 weist das Dämpfungsblech 1 eine Klebeschicht 11 auf.

Der Bremsbelag 3 weist auf seiner der Bremsscheibe 4 zugewandten Seite einen Reibbelag auf. Auf seiner dem Dämpfungsblech 1 zugewandten Seite weist der Bremsbelag 3 eine Rückenplatte auf, an der im in Figur 1 dargestellten Ausführungsbeispiel das Dämpfungsblech 1 mit dessen Klebeschicht 11 festgeklebt ist.

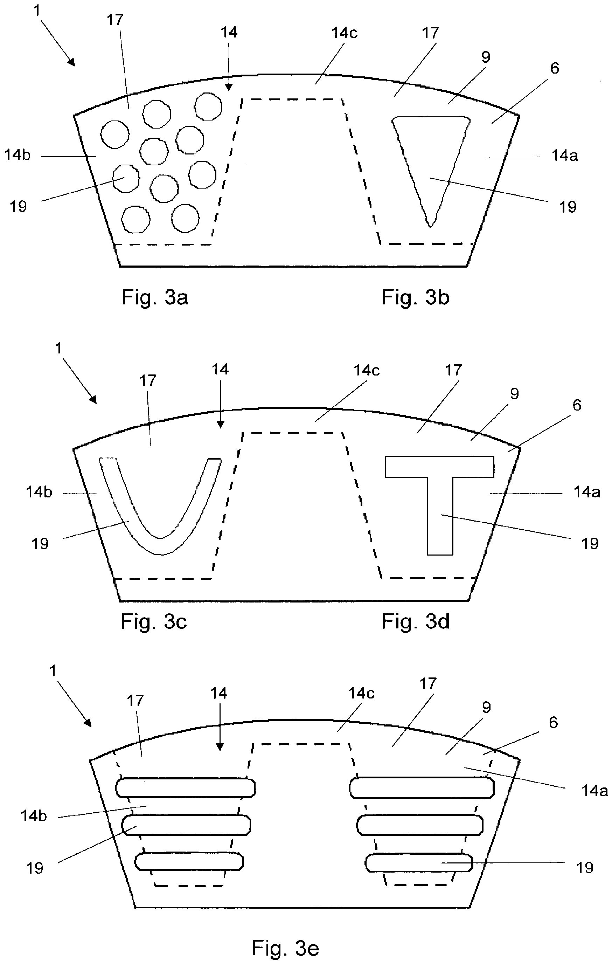

Auf der Elastomerbeschichtung 9 des Dämpfungsbleches 1 ist somit eine erste Druckfläche 14 zur Anlage des Bremssattels 2 - d.h. des druckaufbringenden Bauteils - vorgesehen. Diese erste Druckfläche 14 ist zweiteilig mit jeweils einem Teil 14a, 14b für jeden Finger 2a, 2b des Bremssattels 2. In den in den Figuren 2 und 3a bis 3e dargestellten Ausführungsbeispielen sind die beiden Teile 14a, 14b mittels eines Steges 14c miteinander verbunden. Auf der Klebeschicht 11 des Dämpfungsbleches 1 ist eine zweite Druckfläche 15 zur Anlage der Rückenplatte des Bremsbelages 3 - d.h. des druckaufnehmenden Bauteils - vorhanden.

Zur Vermeidung einer Bewegung des Dämpfungsbleches 1 (mit daran befestigtem Bremsbelag 3) relativ zum Bremssattel 2 weist die Elastomerbeschichtung 9 in der Druckfläche 14 eine Härte und Dicke in Druckrichtung auf, die bei jeder vorgegebenen Flächenpressung in der Druckfläche 14 eine Verformung der Elastomerbeschichtung 9 unter dieser Druckfläche 14 um ein zugehöriges vorgegebenes Mindestmaß 16 bewirken. Auf diese Weise wird die der Bremskraft entgegenwirkende Reibkraft verstärkt und so eine Relativbewegung des Dämpfungsbleches 1 zum Bremssattel 2 verhindert, oder zumindest minimiert, und gedämpft.

Somit ist das Aufbringen einer Klebeschicht zwischen den Fingern 2a, 2b des Bremssattels 2 und der Elastomerbeschichtung 9 des Dämpfungsbleches 1 nicht mehr notwendig. Durch die erfindungsgemäßen Maßnahmen kann sich die Elastomerbeschichtung 9 unter der Druckfläche 14 um ein vorgegebenes Mindestmaß 16 in einer Größenordnung verformen, durch die die Reibkraft so weit erhöht ist, dass eine Relativbewegung zwischen der Elastomerbeschichtung 9 und dem Bremssattel 2 nicht mehr auftritt.

In den Figuren 2 bis 5 sind eine Reihe von Ausführungsbeispielen für erfindungsgemäße Dämpfungsbleche 1 dargestellt, mit verschiedenen Ausführungsformen zur Erzielung bzw. Einstellung eines vorgegebenen Mindestmaßes 16 der Verformung der Elastomerbeschichtung 9 in Druckrichtung im Zusammenspiel von Härte und Dicke der Elastomerbeschichtung 9 und der in den Druckflächen 14 vorhandenen Flächenpressung.

Für die Ausführungsbeispiele gemäß den Figuren 2 bis 5, d.h. für alle Beschichtungen mit einer Oberflächenstruktur, können auch höhere Shore-Härten Verwendung finden.

Die Dicke jeder Elastomerbeschichtung 9 liegt im Größenbereich von 0,01 mm bis 0,5 mm und bevorzugt im Größenbereich von 0,05 mm bis 0,25 mm.

Bei gegebener Härte und Dicke der Elastomerbeschichtung 9 kann die Größe ihrer Verformung über die Größe der Flächenpressung eingestellt werden, d. h. bei gegebener Größe der vom Bremssattel oder Bremskolben aufgebrachten Druckkraft über die Größe der Anlagefläche 17, die diese Druckkraft in der ersten Druckfläche 14 aufnehmen muss.

Das gleiche gilt auf der anderen Seite des Dämpfungsbleches für die Anlagefläche 18, die den Druck in das druckaufnehmende Bauteil 3, d. h. in die Rückenplatte des Bremsbelages 3, weiterleitet.

Figur 2 zeigt die Oberseite 6 des Dämpfungsbleches 1 aus Figur 1, mit gestrichelt nachgezeichneter Lage der ersten Druckfläche 14, an der die beiden Finger 2a, 2b des Bremssattels 2 und der sie verbindende Steg anliegen. Die beiden Kreise stellten Aussparungen 19 in der ersten Druckfläche 14 dar. Die resultierende Anlagefläche 17 ist also die um die Aussparungen 19 reduzierte erste Druckfläche 14.

Die in Figur 2 und auch die in den nachfolgenden Figuren 3 bis 5 dargestellten Aussparungen erstrecken sich durch die gesamte Dicke des Dämpfungsbleches 1 hindurch und bilden in diesem Durchgangsöffnungen aus.

In den Figuren 3a bis 3e sind ebenfalls am Beispiel eines Dämpfungsbleches 1 für einen Bremssattel 2 verschiedene weitere Ausbildungen und Anordnungen von Aussparungen 19 in der Druckfläche gezeigt. Dabei sind in den Figuren 3a bis 3d die Ausführungsbeispiele jeweils nur auf einer Hälfte des Dämpfungsbleches 1 dargestellt. In der Praxis sind die Aussparungen 19 in beiden Hälften gleich ausgebildet. Die Aussparungen 19 können ein- oder mehrteilig sein, jede beliebige geometrische Form annehmen, in jeder geometrischen Form angeordnet sein sowie über die Druckfläche hinausragen, und sie können zusätzlich eine Verlagerung des Druckpunktes des druckaufbringenden bzw. des druckaufnehmenden Bauteils 2, 3 bewirken.

Die Figuren 3a und 3e zeigen mehrteilige Aussparungen 19. Figur 3a zeigt mehrere kreisförmige Aussparungen 19, die möglichst gleichmäßig verteilt in der Druckfläche angeordnet sind. Figur 3e zeigt pro Finger 2a, 2b drei längliche gerade Aussparungen 19, die parallel zueinander und zum unteren Rand des Dämpfungsbleches 1 nebeneinander verlaufen und deren Länge von unten nach oben zunimmt, sodass hier hinsichtlich der Gesamtaußenkontur eine Dreiecksform vorhanden ist. Gemäß den Figuren 3b, 3c und 3d können einteilige Aussparungen 19 unter dem Finger 2a, 2b eines Bremssattels 2 dreieck-, V- bzw. T-förmig ausgebildet sein.

Wenn der Druck-Schwerpunkt die Finger 2a, 2b des Bremssattels 2 mit dem gemeinsamen Schwerpunkt der Aussparung(en) 19 übereinstimmt, findet keine Druckpunktverlagerung statt. Ist zusätzlich zur erfindungsgemäßen Wirkung des Dämpfungsbleches 1 auch eine Druckpunktverlagerung gewünscht, kann dies mit einem Versatz zwischen Druck-Schwerpunkt der Finger 2a, 2b des Bremssattels und Schwerpunkt der Aussparung(en) 19 erzielt werden.

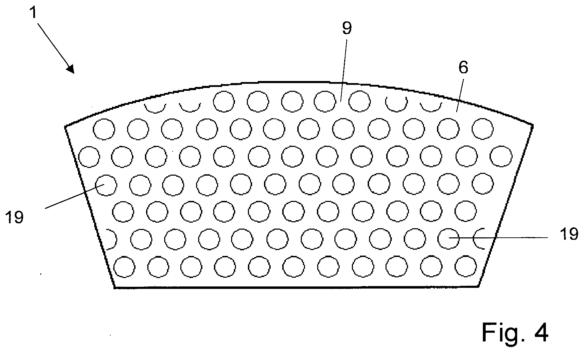

Figur 4 zeigt ein Dämpfungsblech 1 in Form eines Lochbleches, bei dem sich eine Vielzahl von Aussparungen 19, im dargestellten Ausführungsbeispiel eine Vielzahl kreisförmiger Aussparungen 19, über die gesamte Fläche des Dämpfungsbleches 1 erstreckt.

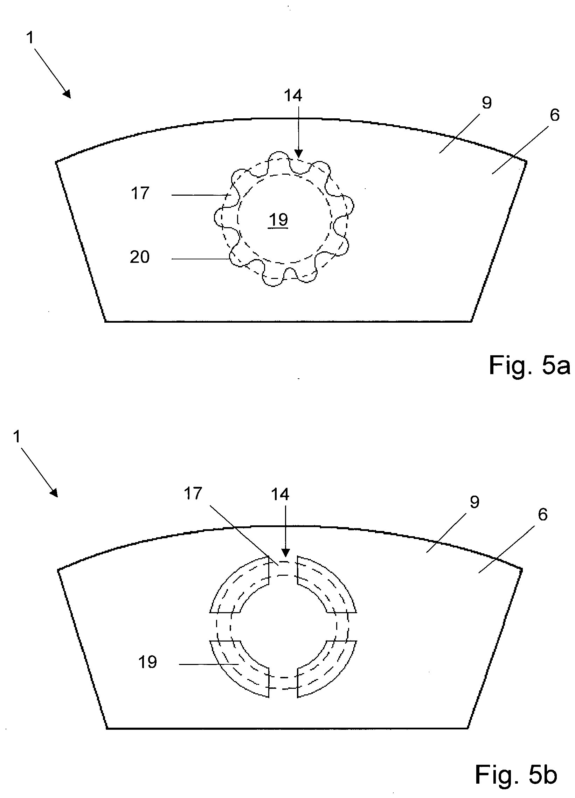

Die Figuren 5a und 5b zeigen Beispiele für Aussparungen 19 in Dämpfungsblechen 1, die eine mittige erste Druckfläche 14 zur Anlage eines Bremskolbens 2 als druckaufbringendes Bauteil aufweisen. In Figur 5a ist eine kreisförmige Aussparung 19 mit einem wellenförmigen Umfangsrand 20 dargestellt. Die erste Druckfläche 14 zur Anlage des Bremskolbens ist kreisringförmig; sie ist gestrichelt dargestellt und liegt auf dem wellenförmigen Rand 20. Figur 5b zeigt eine kreisförmige Anordnung von vier Aussparungen 19 in Form jeweils eines Kreisringabschnitts. Eine solche Ausbildung und Anordnung von Aussparungen 19 bewirkt eine Freistellung der Druckfläche 14, d. h. die Druckfläche 14 ist weitgehend vom restlichen Teil des Dämpfungsbleches 1 abgekoppelt. Eine solche Freistellung wirkt zusätzlich einer Aufwölbung der Randbereiche des Dämpfungsbleches 1 entgegen.

Es ist auch daran gedacht, Aussparungen durch Prägungen im Dämpfungsblech 1 auszubilden. Dabei erstreckt sich die Prägung durch den gesamten Querschnitt des Dämpfungsbleches 1 hindurch und bildet auf der einen Seite eine Vertiefung bzw. Aussparung 19 aus, die die Anlagefläche 17 in einer Druckfläche 14 reduziert, und auf der anderen Seite eine Auswölbung, beispielsweise in Form einer hervorstehenden Noppe oder eines hervorstehenden Kragens, aus, die bzw. der bei Anlage des Dämpfungsbleches 1 an einem angrenzenden Bauteil 3 in eine Bohrung dieses Bauteils 3 hineinragt, beispielsweise in eine Bohrung in der Rückenplatte des Bremsbelages 3.

## Patentansprüche

1. Dämpfungsblech (1), insbesondere für Kraftfahrzeugbremsen, mit wenigstens einer Trägerplatte (7), die auf wenigstens einer Seite eine Elastomerbeschichtung (9, 9') aufweist, wobei auf einer Seite der Trägerplatte (7) eine erste Druckfläche (14) zur Anlage eines druckaufbringenden Bauteils (2) und auf der anderen Seite eine zweite Druckfläche (15) zur Anlage eines druckaufnehmenden Bauteils (3) vorgesehen ist und eine der beiden Druckflächen (14 oder 15) auf der Elastomerbeschichtung (9, 9') angeordnet ist, die eine Härte und eine Dicke in Druckrichtung aufweist, wobei in der zweiten Druckfläche (15) längs der Blechebene im Betriebszustand eine durch das druckaufbringende Bauteil (2) erzeugte Bremskraft einwirkt, wobei die Härte und die Dicke der Elastomerbeschichtung (9, 9') in Druckrichtung so ausgelegt sind, dass sich die Elastomerbeschichtung (9, 9') bei jeder vorgegebenen Flächenpressung in der auf ihr ausgebildeten Druckfläche (14, 15) um ein zugehöriges vorgegebenes Mindestmaß (16) unter dieser Druckfläche (14, 15) verformt, wobei in wenigstens einer der Elastomerbeschichtungen (9, 9') wenigstens eine derartige Aussparung (19) ausgebildet ist, dass nur ein Teil der Druckfläche (14, 15) eine Anlagefläche (17, 18) für das druckaufbringende bzw. das druckaufnehmende Bauteil (2, 3) bildet, wobei die Gesamtfläche der Aussparungen (19) so groß ist, dass bei einer vorgegebenen Druckkraft in der Anlagefläche (17, 18) die vorgegebene Flächenpressung vorhanden ist,
**gekennzeichnet durch**
eine resultierende Anlagefläche (17), die von einer um die Aussparungen (19) reduzierten ersten Druckfläche (14) gebildet wird, und
wobei die Aussparungen (19) Durchgangsöffnungen ausbilden, die sich durch die gesamte Dicke des Dämpfungsbleches (1) hindurch erstrecken.

2. Dämpfungsblech nach Anspruch 1, **dadurch gekennzeichnet, dass** die Trägerplatte (7) auf ihren beiden Seiten eine Elastomerbeschichtung (9, 9') aufweist und beide Druckflächen (14, 15) auf der jeweils entsprechenden Elastomerbeschichtung (9, 9') angeordnet sind.

3. Dämpfungsblech nach Anspruch 1 oder 2, **dadurch gekennzeichnet, dass** die Härte jeder Elastomerbeschichtung (9, 9') weniger als 75 Shore-Härte und bevorzugt maximal 70 Shore-Härte beträgt.

4. Dämpfungsblech nach einem der vorhergehenden Ansprüche, **dadurch gekennzeichnet, dass** die Dicke jeder Elastomerbeschichtung (9, 9') im Größenbereich von 0,01 mm bis 0,5 mm und bevorzugt im Größenbereich von 0,05 mm bis 0,25 mm liegt.

5. Dämpfungsblech nach einem der vorhergehenden Ansprüche, **dadurch gekennzeichnet, dass** wenigstens eine der Elastomerbeschichtungen (9, 9') einen feinkörnigen magnetischen Füllstoff und/oder grobkörnige Partikel enthält.

6. Dämpfungsblech nach einem der vorhergehenden Ansprüche, **dadurch gekennzeichnet, dass** wenigstens eine der Elastomerbeschichtungen (9, 9') in einem die Druckfläche (14, 15) enthaltenden Bereich eine erste Härte und ansonsten eine zweite, von der ersten verschiedene Härte aufweist.

7. Dämpfungsblech nach einem der vorhergehenden Ansprüche, **dadurch gekennzeichnet, dass** wenigstens eine der Elastomerbeschichtungen (9, 9') auf eine bereits vorhandene Beschichtung der Trägerplatte (7) aufgebracht ist.

8. Dämpfungsblech nach Anspruch 7, **dadurch gekennzeichnet, dass** die Elastomerbeschichtung (9, 9') eine Härte aufweist, die von der Härte der bereits vorhandenen Beschichtung verschieden ist.

9. Dämpfungsblech nach einem der vorhergehenden Ansprüche, **dadurch gekennzeichnet, dass** die Aussparungen (19) über die Druckfläche (14, 15) hinausragen.

10. Dämpfungsblech nach einem der vorhergehenden Ansprüche, **dadurch gekennzeichnet, dass** die Druckfläche (14, 15) mindestens eine Prägung aufweist, die sich durch den gesamten Querschnitt des Dämpfungsbleches (1) hindurch erstreckt und in der Druckfläche (14, 15) eine Aussparung (19) zur Reduzierung der Anlagefläche (17, 18) ausbildet und auf der gegenüberliegenden Seite des Dämpfungsbleches (1) eine hervorstehende Noppe ausbildet, die bei Anlage des Dämpfungsbleches (1) an einem angrenzenden Bauteil (3) in eine Bohrung dieses Bauteils (3) hineinragt.

11. Dämpfungsblech nach einem der vorhergehenden Ansprüche, **dadurch gekennzeichnet, dass** in der Druckfläche (14, 15) Erhöhungen angeordnet sind, die zwischen sich die Aussparungen (19) ausbilden und deren Oberseiten die Anlagefläche (17, 18) bilden.

12. Dämpfungsblech nach Anspruch 10, **dadurch gekennzeichnet, dass** eine weitere Beschichtung zwischen den Erhöhungen aufgebracht ist.

13. Dämpfungsblech nach Anspruch 5 und 10, **dadurch gekennzeichnet, dass** Partikel aus der Elastomerbeschichtung (9, 9') hervorstehen und Erhöhungen bilden.

## Claims

1. Damping plate (1), in particular for motor vehicle brakes, with at least one carrier plate (7) having an elastomer coating (9, 9') on at least one side, wherein on one side of the support plate (7) is provided a first pressure surface (14) for abutment of a pressure-applying component (2) and on the other side a second pressure surface (15) for abutment of a pressure-receiving component (3) and one of the two pressure surfaces (14 or 15) is arranged on the elastomeric coating (9, 9') having a hardness and a thickness in the pressure direction, wherein in the second pressure surface (15) along the plane of the sheet in the operating state, a braking force impacts which generated by the pressure-applying member (2), wherein the hardness and the thickness of the elastomer coating (9, 9 ') are designed in the pressure direction so that the elastomer coating (9, 9') at each given surface pressure in the pressure surface (14, 15) formed on it by an associated predetermined minimum dimension (16) under this pressure surface (14, 15) is deformed, wherein in at least one of the elastomeric coatings (9, 9 ') at least one recess (19) is formed so that only a part of the pressure surface (14, 15) has a contact surface (17, 18) for the pressure-applying or the pressure-receiving component (2, 3), wherein the total area of the recesses (19) is so large that at a predetermined compressive force in the contact surface (17, 18) the predetermined surface pressure is present,
**characterized in that**
a resulting contact surface (17) which is formed by a first pressure surface (14) which is reduced by the recesses (19), and
wherein the recesses (19) form passage openings which extend through the entire thickness of the damping plate (1).

2. Damping sheet according to claim 1, **characterized in that** the support plate (7) on its two sides show an elastomer coating (9, 9') and both pressure surfaces (14, 15) are arranged on the respectively corresponding elastomer coating (9. 9').

3. Damping sheet according to claim 1 or 2, **characterized in that** the hardness of each elastomer coating (9, 9 ') is less than 75 Shore hardness and preferably a maximum of 70 Shore hardness.

4. Damping sheet according to one of the preceding claims, **characterized in that** the thickness of each elastomeric coating (9, 9 ') is in the size range of 0,01 mm to 0.5 mm and preferably in the size range of 0,05 mm to 0,25 mm.

5. Damping sheet according to one of the preceding claims, **characterized in that** at least one of the elastomeric coatings (9, 9 ') contains a fine-grained magnetic filler and/or coarse-grained particles.

6. Damping plate according to one of the preceding claims, **characterized in that** at least one of the elastomeric coatings (9, 9 ') has a first hardness in a region containing the pressure surface (14, 15), and otherwise a second hardness, different from the first hardness.

7. Damping plate according to one of the preceding claims, **characterized in that** at least one of the elastomeric coatings (9, 9 ') is applied to a coating already existing on the carrier plate (7).

8. Damping sheet according to claim 7, **characterized in that** the elastomer coating (9, 9') has a hardness which is different from the hardness of the already existing coating.

9. Damping plate according to one of the preceding claims, **characterized in that** recesses (19) protrude beyond the pressure surface (14, 15).

10. Damping sheet according to one of the preceding claims, **characterized in that** the pressure surface (14, 15) has at least one embossment which extends through the entire cross section of the damping plate (1) and in the pressure surface (14, 15) a recess (19) for reducing the contact surface (17, 18) is formed and on the opposite side of the damping plate (1) a protruding knob is formed which upon contact of the damping plate (1) on an adjacent component (3) extends in a bore of this component (3).

11. Damping plate according to one of the preceding claims, **characterized in that** in the pressure surface (14, 15) elevations are arranged, which form between them the recesses (19) and whose upper sides form the contact surface (17, 18).

12. Damping plate according to claim 10, **characterized in that** a further coating between the elevations is applied.

13. Damping sheet according to claim 5 and 10, **characterized in that** particles of the elastomer coating (9, 9 ') protrude and form elevations.

## Revendications

1. Tôle d'amortissement (1), en particulier pour des freins de véhicule automobile, avec au moins une plaque de support (7), qui présente, sur au moins un côté, un revêtement élastomère (9, 9'), dans laquelle une première surface de pression (14) servant à l'appui d'un composant (2) à appliquer par pression est prévue sur un côté de la plaque de support (7) et une seconde surface de pression (15) servant à l'appui d'un composant (3) à recevoir par pression est prévue sur l'autre côté et une des deux surfaces de pression (14 ou 15) est disposée sur le revêtement élastomère (9, 9'), qui présente une dureté et une épaisseur dans la direction de pression, dans laquelle une force de freinage générée par le composant (2) à appliquer par pression agit dans la seconde surface de pression (15) le long du plan de tôle dans l'état de fonctionnement, dans laquelle la dureté et l'épaisseur du revêtement élastomère (9, 9') dans la direction de pression sont configurées de telle sorte que le revêtement élastomère (9, 9') se déforme en présence de chaque pression de surface spécifiée dans la surface de pression (14, 15) réalisée sur ledit revêtement élastomère d'une dimension minimale (16) spécifiée associée sous ladite surface de pression (14, 15), dans laquelle est réalisé, dans au moins un des revêtements élastomères (9, 9'), au moins un évidement (19) tel que seulement une partie de la surface de pression (14, 15) forme une surface d'appui (17, 18) pour le composant (2, 3) à appliquer par pression ou à recevoir par pression, dans laquelle la surface totale des évidements (19) est si grande qu'en présence d'une force de pression spécifiée dans la surface d'appui (17, 18), la pression de surface spécifiée est présente,
**caractérisée par**
une surface d'appui (17) résultante, qui est formée par une première surface de pression (14) réduite des évidements (19), et
dans laquelle les évidements (19) réalisent des ouvertures de passage, qui s'étendent à travers l'épaisseur totale de la tôle d'amortissement (1) de part en part.

2. Tôle d'amortissement selon la revendication 1, **caractérisée en ce que** la plaque de support (7) présente sur ses deux côtés un revêtement élastomère (9, 9') et deux surfaces de pression (14, 15) sont disposées respectivement sur le revêtement élastomère (9,9') correspondant.

3. Tôle d'amortissement selon la revendication 1 ou 2, **caractérisée en ce que** la dureté de chaque revêtement élastomère (9, 9') est inférieure à 75 dureté Shore et de manière préférée de 70 dureté Shore au maximum.

4. Tôle d'amortissement selon l'une quelconque des revendications précédentes, **caractérisée en ce que** l'épaisseur de chaque revêtement élastomère (9, 9') est de l'ordre de 0,01 mm à 0,5 mm, de manière préférée de l'ordre de 0,05 mm à 0,25 mm.

5. Tôle d'amortissement selon l'une quelconque des revendications précédentes, **caractérisée en ce qu'**au moins un des revêtements élastomères (9, 9') contient une charge de remplissage magnétique à grains fins et/ou des particules à gros grains.

6. Tôle d'amortissement selon l'une quelconque des revendications précédentes, **caractérisée en ce qu'**au moins un des revêtements élastomères (9, 9') présente, dans une zone contenant la surface de pression (14, 15), une première dureté et sinon une deuxième dureté différente de la première dureté.

7. Tôle d'amortissement selon l'une quelconque des revendications précédentes, **caractérisée en ce qu'**au moins un des revêtements élastomères (9, 9') est appliqué sur un revêtement déjà existant de la plaque de support (7).

8. Tôle d'amortissement selon la revendication 7, **caractérisée en ce que** le revêtement élastomère (9, 9') présente une dureté, qui est différente de la dureté du revêtement déjà existant.

9. Tôle d'amortissement selon l'une quelconque des revendications précédentes, **caractérisée en ce que** les évidements (19) dépassent de la surface de pression (14, 15).

10. Tôle d'amortissement selon l'une quelconque des revendications précédentes, **caractérisée en ce que** la surface de pression (14, 15) présente au moins une empreinte, qui s'étend à travers la totalité de la section transversale de la tôle d'amortissement (1) de part en part et réalise un évidement (19) servant à réduire la surface d'appui (17, 18) dans la surface de pression (14, 15) et réalise sur le côté opposé de la tôle d'amortissement (1) une protubérance saillante, qui dépasse, dans le cas de l'appui de la tôle d'amortissement (1) au niveau d'un composant (3) adjacent, dans un alésage dudit composant (3).

11. Tôle d'amortissement selon l'une quelconque des revendications précédentes, **caractérisée en ce que** sont disposées dans la surface de pression (14, 15) des parties surélevées, qui réalisent entre elles les évidements (19) et dont les côtés supérieurs forment la surface d'appui (17, 18).

12. Tôle d'amortissement selon la revendication 10, **caractérisée en ce qu'**un autre revêtement est appliqué entre les parties surélevées.

13. Tôle d'amortissement selon la revendication 5 et 10, **caractérisée en ce que** des particules font saillie du revêtement élastomère (9, 9') et forment des parties surélevées.
